Europäisches Patentamt

(19) European Patent Office

Office européen des brevets

(11) Numéro de publication: **0 117 583**
**B1**

(12) **FASCICULE DE BREVET EUROPÉEN**

(45) Date de publication du fascicule du brevet:
**04.10.89**

(51) Int. Cl.⁴: **A 47 J 31/40**

(21) Numéro de dépôt: **84200206.5**

(22) Date de dépôt: **16.02.84**

(54) Mécanisme automatique pour la production de café express.

(30) Priorité: **25.02.83 IT 8553083**
**12.07.83 IT 8559983**
**06.12.83 IT 8565083**

(43) Date de publication de la demande:
**05.09.84 Bulletin 84/36**

(45) Mention de la délivrance du brevet:
**04.10.89 Bulletin 89/40**

(84) Etats contractants désignés:
**AT BE CH DE FR GB IT LI LU NL SE**

(56) Documents cité:
**FR-A-2 414 894**
**FR-A-2 447 702**
**FR-A-2 452 905**

(73) Titulaire: **Gasparella, Valentino, Via Piana
d'Oriente, 22, I-36065 Mussolente (Vicenza) (IT)**

(72) Inventeur: **Gasparella, Valentino, Via Piana
d'Oriente, 22, I-36065 Mussolente (Vicenza) (IT)**

(74) Mandataire: **Bettello, Luigi, Dott. Ing., Via Col
d'Echele, 25, I-36100 Vicenza (IT)**

LIBER, STOCKHOLM 1989

EP 0 117 583 B1

## Description

La présente invention a pour un mécanisme automatique pour la production de café express conforme au préambule de la revendication 1 et destiné à être appliqué à une machine usuelle de distribution de café qui peut être du type à pièces de monnaie ou à jetons en vue d'être utilisée dans les lieux publics, mais également du type domestique à commande par poussoir.

Un tel mécanisme automatique est connu du FR-A-2 452 905. Le but de la présente invention est de perfectionner un mécanisme de ce type.

Le mécanisme suivant l'invention conforme à la partie caractérisante de la revendication 1 comprend essentiellement une plaquette mobile verticalement qui, par l'intermédiaire de leviers appropriés et de cames convenablement profilées, commande le chargement du réceptacle porte-filtre, le nivellement de la charge de café en poudre, l'abaissement de l'organe presseur et l'alimentation en eau chaude pour la préparation de l'infusion, ainsi que le soulèvement du filtre et l'expulsion de la pastille de café exprimé à la fin du cycle opératoire.

Il est en outre prévu un dispositif anti-grippage propre à être associé au réceptacle dans lequel est réalisée l'infusion du café dans les machines à café express ce dispositif opère le lavage automatique d'une part de la tige qui soutient le petit plateau constituant le fond mobile ou filtre du réceptacle précité, d'autre part de la perforation dans laquelle la tige sus-mentionnée se déplace, ce lavage étant effectué dès que la distribution du café est terminée afin d'éviter le grippage du fond sus-mentionné, grippage qu'on observe inévitablement dans les constructions usuelles après un certain temps d'usage par suite des pertes et des infiltrations du café.

Le lavage doit survenir avant que le filtre ne s'élève, pour éviter que l'eau de lavage ne puisse s'infiltrer dans le réceptacle et polluer le café.

De cette manière on élimine la nécessité des manutentions fréquentes auxquelles sont soumises les machines automatiques usuelles, en résolvant de la sorte le gros problème consistant dans des manipulations périodiques et inévitables impliquant des temps d'arrêt importants et des pertes non négligeables de production, par suite des infiltrations du café le long de la tige du plateau ou fond; ces infiltrations provoquent au bout d'un certain temps le grippage total du plateau précité et obligent à arrêter la machine, en même temps qu'elles engendrent l'usure des garnitures d'étanchéité qui travaillent à coulissement et qui doivent être remplacées lorsque le grippage est survenu.

L'ensemble mécanique complet ainsi réalisé présente l'avantage d'être de construction simple et économique, en même temps qu'il reste facilement accessible pour les opérations de nettoyage et de manutention, ce qui se traduit évidemment de manière favorable sur le plan de l'utilisation pratique du distributeur et sur celui de sa sécurité de fonctionnement.

Le dessin annexé, donné à titre d'exemple, permettra de mieux comprendre l'invention, les caractéristiques qu'elle présente et les avantages qu'elle est susceptible de procurer:

Fig. 1 est une vue en perspective montrant la partie antérieure d'un mécanisme établi conformément à l'invention.

Fig. 2 est une vue en perspective suivant un autre angle.

Fig. 3 est une vue en élévation montrant le mécanisme avec l'organe presseur soulevé.

Fig. 4 est la vue de côté correspondante.

Fig. 5 est une vue de côté avec coupe verticale suivant le plan indiqué en V - V en fig. 6.

Fig. 6 est une vue de côté avec coupe verticale suivant le plan VI - VI de fig. 4.

Fig. 7 et 8 sont des vues de côté, respectivement en élévation, illustrant une position subséquente de travail du mécanisme.

Fig. 9 et 10 sont des vues partielles représentant en élévation, respectivement par le côté, une autre position subséquente de travail.

Fig. 11 est une vue en élévation avec coupe partielle, montrant le mécanisme durant la phase d'expulsion de la pastille de café exprimé.

Fig. 12 et 13 sont des vues en élévation, respectivement par côté, illustrant encore une autre position subséquente de travail du mécanisme.

Fig. 14 est une vue en élévation avec coupe partielle montrant le mécanisme revenu à la position de repos.

Fig. 15 est une vue en perspective montrant à plus grande échelle un détail de réalisation de la machine.

Fig. 16 est une coupe verticale du réceptacle à café, muni du dispositif de lavage prévu par l'invention.

Fig. 17 illustre une variante de réalisation de ce dispositif.

Fig. 18 montre en perspective, à la position de repos, un mécanisme établi conformément à un autre mode de mise en oeuvre de l'invention.

Fig. 19 représente le mécanisme suivant fig. 18, sous un angle différent et à la position de travail.

Fig. 20 est une vue en élévation correspondant à fig. 18.

Fig. 21 est une coupe partielle suivant le plan indiqué en XXI - XXI en fig. 20.

Fig. 22 en est une vue de côté à la position suivant fig. 20.

Fig. 23 est une coupe verticale suivant le plan indiqué en XXIII - XXIII en fig. 20.

Fig. 24 reproduit fig. 20, le mécanisme étant supposé à une position de travail différente.

Fig. 25 est une coupe latérale suivant le plan indiqué en XXV - XXV en fig. 24.

Fig. 26 est une vue en élévation représentant le mécanisme à une autre position de travail, le réceptacle étant montré en coupe verticale.

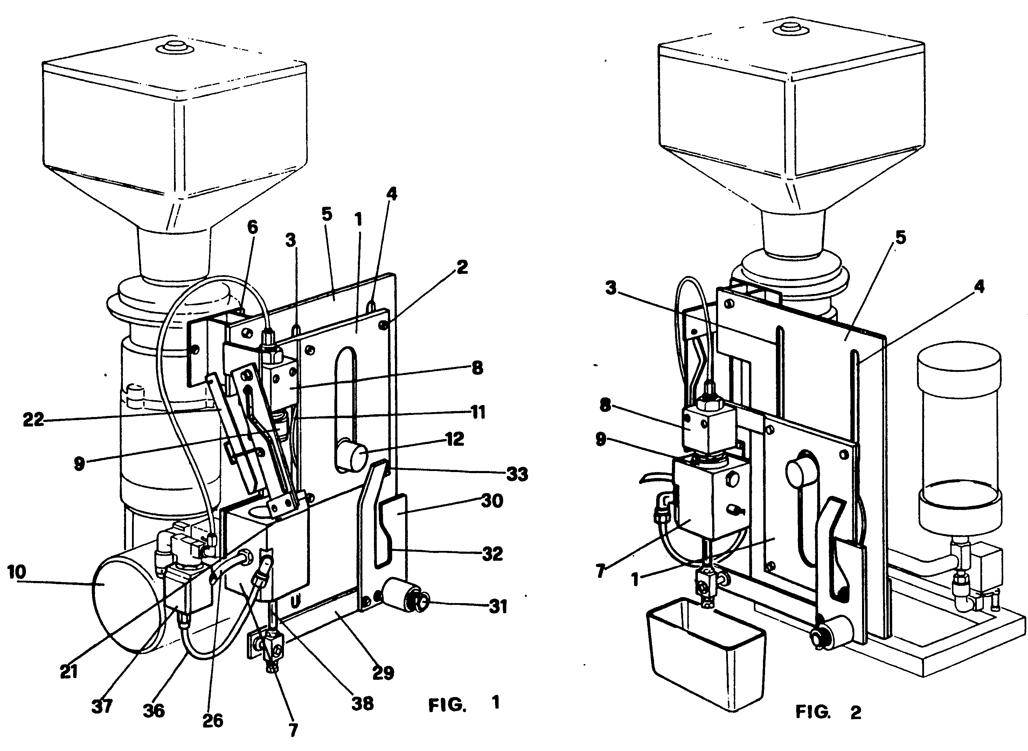

Comme on peut le voir en fig. 1 et 2, le mécanisme suivant l'invention comprend essentiellement une plaquette mobile 1, munie de goujons de guidage 2 qui se déplacent à l'intérieur des ouvertures 3 et 4 d'une plaque fixe 5 rendue solidaire de la machine, par exemple à travers le bâti général 6.

La plaque fixe 5 porte le réceptacle 7 à l'intérieur duquel est introduit le café. A la plaquette mobile 1 est fixé un bloc 8 qui porte l'organe presseur 9 à travers lequel est introduite l'eau chaude provenant, par le moyen d'un tube flexible, d'une petite chaudière 10.

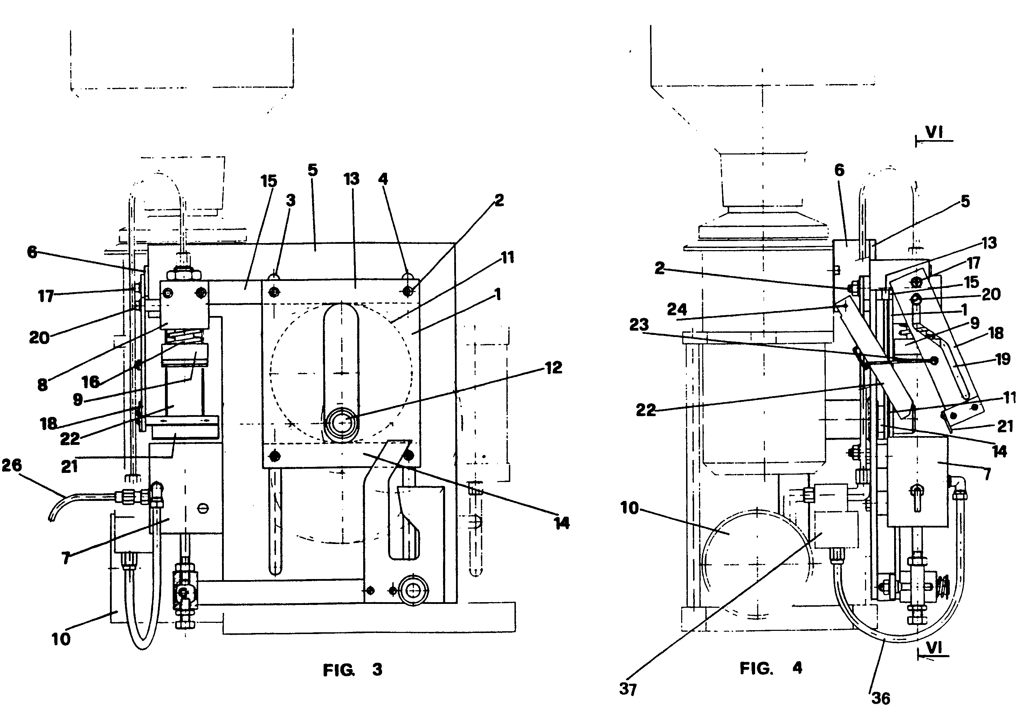

Comme on peut mieux le voir en fig. 3 et 4, le mécanisme comprend également un disque circulaire 11 monté sur un axe central 12 qui est prévu en position fixe au centre de la plaque 5 et qui fait fonction de guide pour le mouvement vertical de la plaquette mobile 1; celle-ci est munie à l'arrière de portées métalliques horizontales 13 et 14 entre lesquelles se déplace le disque 11 qui de cette manière commande le déplacement vertical d'abaissement et de soulèvement successif de la plaquette précitée.

Cette dernière est reliée par une tige 15 au bloc 8 qui, comme on l'a vu plus haut, porte l'organe presseur 9 et ce avec interposition d'un ressort 16.

Sur `un axe 17 solidaire de la plaque 5 est montée à rotation une glissière 18 découpée d'une rainure profilée 19 dans laquelle se déplace un goujon 20 porté par le bloc 8.

Cette glissière 18 est munie vers le bas d'une raclette 21 propre à venir s'appliquer contre le débouché supérieur du réceptacle 7 afin d'éliminer le café en excès qui dépasse le niveau supérieur dudit réceptacle.

Celui-ci est alimenté par un canal ou plan incliné 22 relié à articulation à la glissière 18 par une tige mobile 23; un pivot 24 assure la liaison articulée de cette tige avec le bâti 6. On obtient de la sorte un mouvement pendulaire du plan incliné 22 et de la glissière 18 munie de la raclette 21, ce qui permet d'éliminer du débouché du réceptacle 7, le café en excès en évitant que celui-ci puisse obstruer le mécanisme au cours de son fonctionnement.

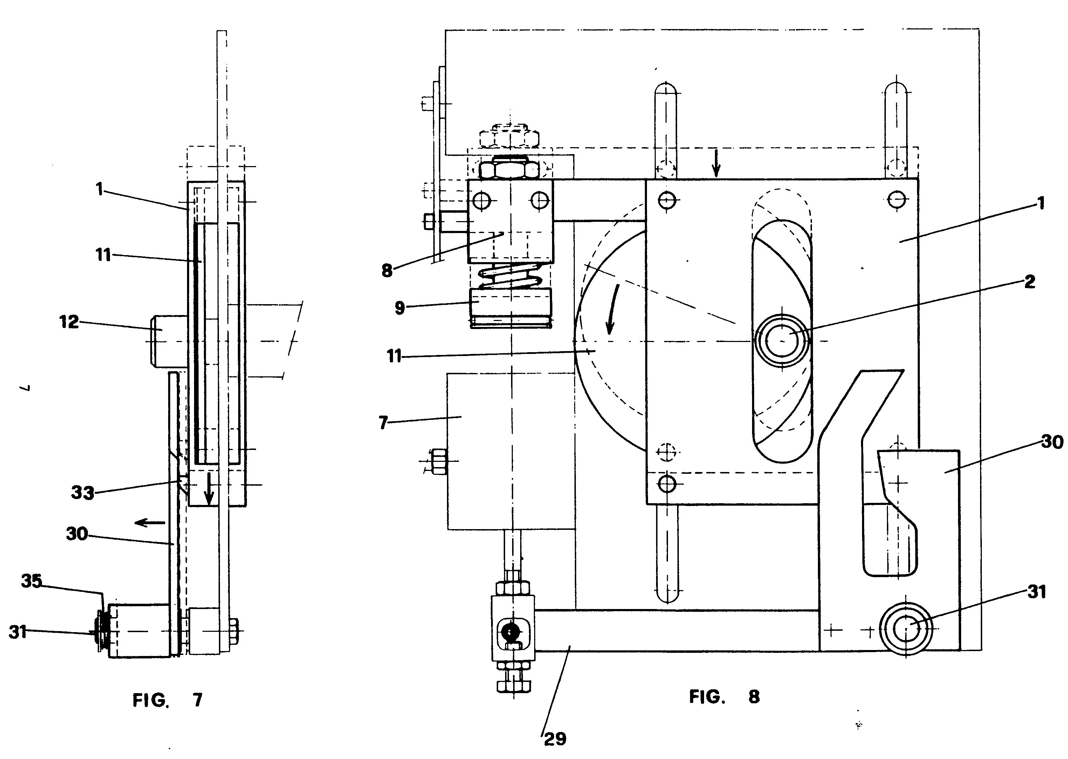

A l'intérieur du réceptacle 7 est disposé un fond perforé 25 (fig. 6) sur lequel prend appui le café et qui laisse passer l'infusion subséquennement recueillie par un tube 26. Ce fond 25 porte vers le bas une tige 27 qui est reliée à articulation, par un goujon 28 et une biellette 29, à un levier plat 30, lequel oscille sur son axe 31 en même temps que la biellette 29. Le levier 30 est découpé d'une ouverture 32 qui fait fonction de came pour un goujon 33 solidaire de la plaquette 1.

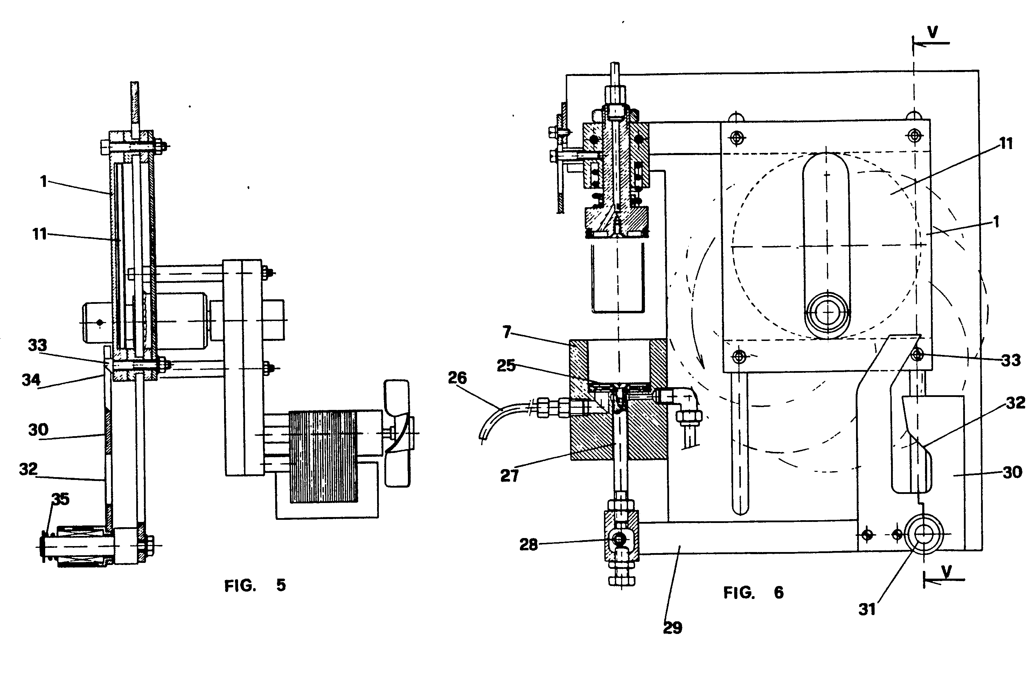

Comme on peut le voir en fig. 5, le levier 30 comporte un bord incliné 34 qui assure le déplacement dudit levier 30 vers l'avant moyennant compression du ressort 35, et ce jusqu'à ce que le goujon 33 pénètre dans l'ouverture 32 pour faire osciller angulairement ledit levier sur l'axe 31 au cours du mouvement de remontée de la plaquette mobile 1.

Au cours de cette phase, la biellette 29 se déplace vers le haut en soulevant le fond mobile 25 à l'intérieur du réceptacle 7, ce qui assure l'expulsion de la pastille de café exprimé.

Les phases successives de fonctionnement de la machine peuvent être analysées en fig. 5 à 14.

Fig. 5 et 6 montrent la première phase ou phase de départ de la machine, dans laquelle le disque 11 est encore tourne vers le haut en maintenant ainsi la plaquette 1 soulevée à sa position supérieure.

En fig. 7 et 8 le disque 11 a commencé sa rotation autour de l'axe 12 en déplaçant vers le bas la plaquette 1 en même temps que le bloc 8 portant l'organe presseur 9. On notera qu'à la position illustrée le goujon 33 a déjà repoussé le levier 30 vers l'avant en comprimant le ressort 35 prévu sur l'axe 31. La biellette 29 est encore orientée horizontalement, si bien que le fond mobile 25 se trouve toujours contre le fond fixe du réceptacle 7.

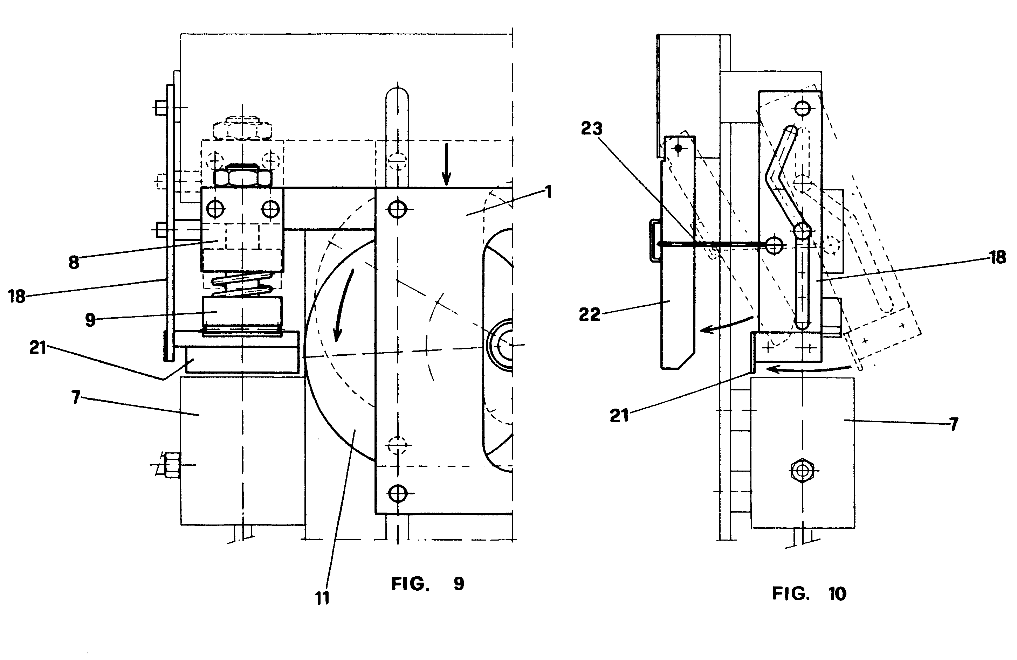

En fig. 9 et 10 le disque 11 continue sa rotation en provoquant l'abaissement de la plaquette 1 et du bloc 8 avec l'organe presseur 9, qui dans ces conditions se rapproche du réceptacle 7 sans l'atteindre encore. A cette position toutefois la raclette 21 prévue sur la glissière 18 se trouve désormais en position verticale avec le canal ou plan incliné 22 qui lui est associé à l'aide de la tige 23, de telle sorte que le raclage du débouché supérieur du réceptacle 7 est termine.

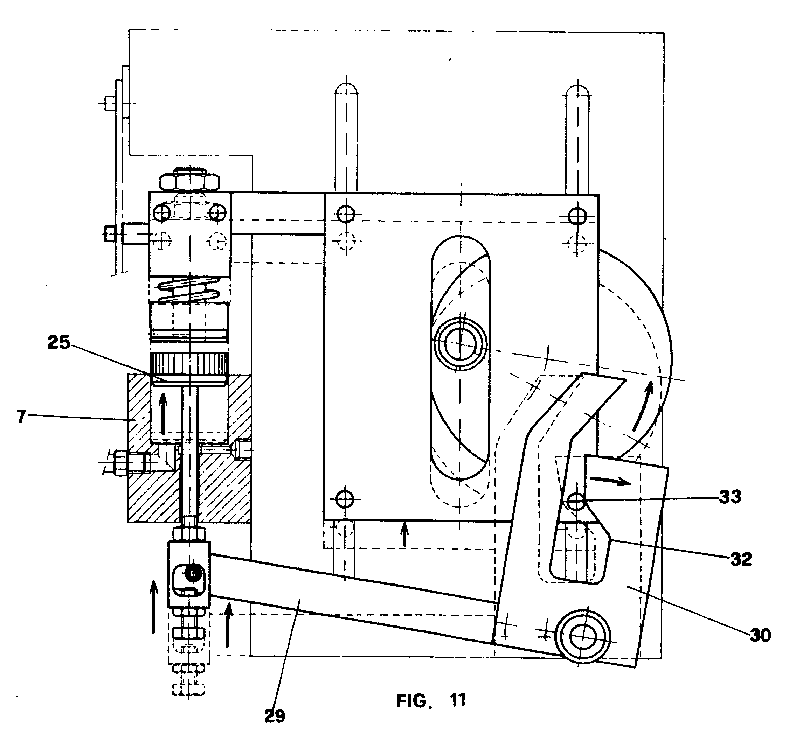

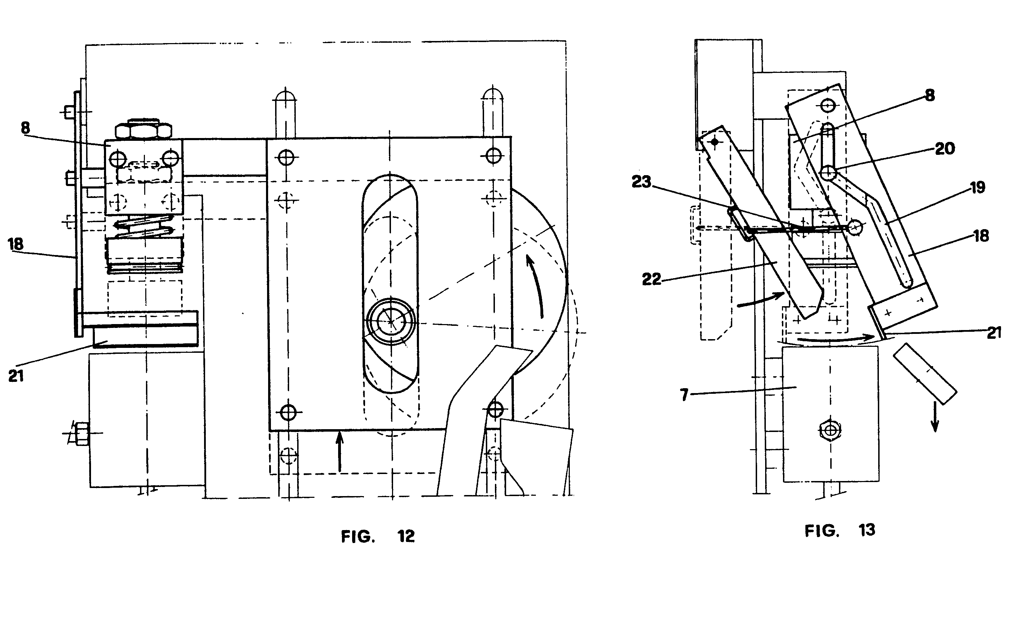

A la position subséquente illustrée en fig. 11, le fond mobile 25 du réceptacle 7 est soulevé sous l'effet de la biellette 29 qui s'incline vers le haut par suite de l'action du goujon 33 sur l'ouverture 32 du levier 30, en amenant à l'extérieur du réceptacle le café exprimé celui-ci est alors repoussé vers l'avant par la raclette 21 (fig. 13) prévue sur la glissière 18 qui s'incline à nouveau vers l'avant par suite du profil particulier de la rainure 19 dans laquelle est engagé le goujon 20 solidaire du bloc 8. Celui-ci fait incliner vers l'avant le canal 22 qui revient de la sorte se positionner pour assurer un nouveau chargement de café dans le réceptacle 7.

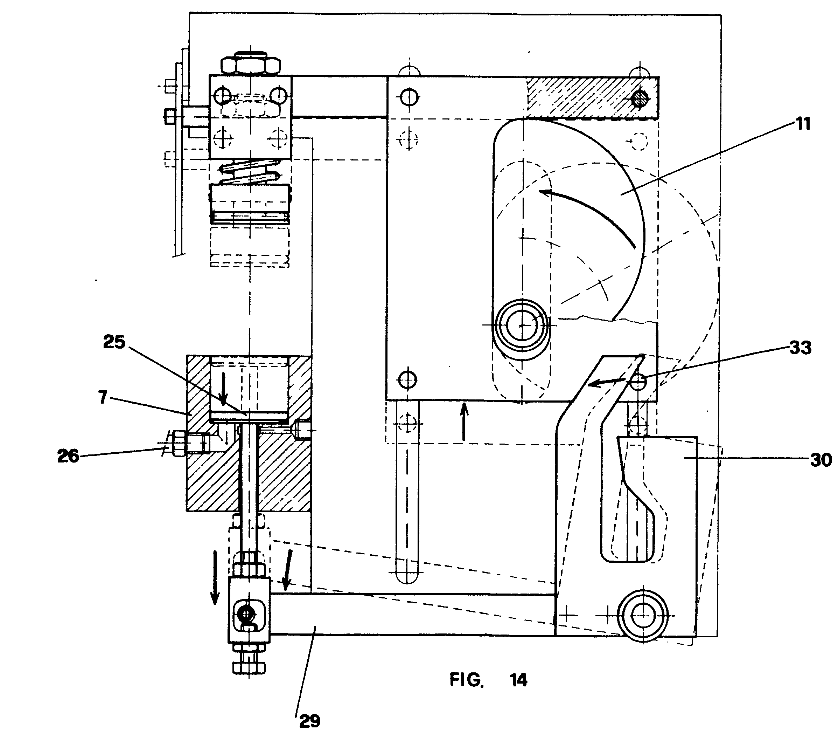

Fig. 14 montre la dernière phase de rotation du disque 11. Le goujon 33 assure le redressement du levier 30 avec sa biellette 29 et en conséquence l'abaissement du fond mobile 25 du réceptacle 7, ce qui permet le retour de l'ensemble à la position de départ en étant prêt pour la préparation d'une nouvelle tasse de café.

Comme on peut le voir en fig. 1, à l'intérieur du réceptacle 7 dans lequel est introduite la poudre de café par l'intermédiaire du plan incliné 22, ladite poudre étant nivelée vers le haut par la raclette 21 pour être comprimée par l'organe presseur 9, débouche un petit tuyau 36 qui amène l'eau refoulée par l'électro-vanne 37 à l'intérieur du réceptacle précité, pour assurer le lavage de la tige 38 et de la perforation dans laquelle cette dernière se déplace, ce lavage étant opéré lorsque l'infusion descend à travers le tube 26 dans le réceptacle (non visible en fig. 1).

On sait en effet que l'électro-vanne 37 (fig. 4) qui commande la descente de l'eau depuis la chaudière 10 jusqu'au réceptacle 7, comporte un tube de refoulement 36 à travers lequel est évacuée l'eau en excès qui, à une pression sensiblement supérieure à la pression atmosphérique et à une température élevée, n'est pas nécessaire à l'infusion du café. Usuellement cette eau est directement refoulée dans un réservoir collecteur disposé à la partie inférieure de la machine.

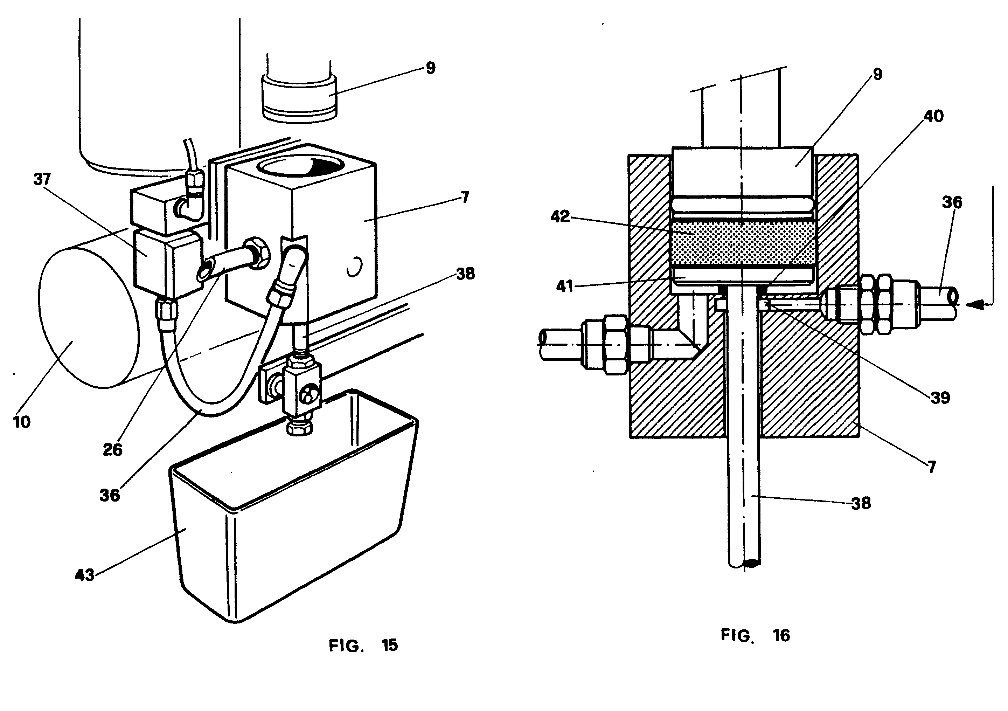

Au contraire avec le dispositif prévu par l'invention, cette eau en excès arrivant par le tube 36 (fig. 16) pénètre dans une cavité 39 qui entoure la tige 38 (correspondant à celle référencée ci-avant 27), ce qui assure un lavage efficace de ladite tige et de la perforation dans laquelle elle se déplace en éliminant de la sorte les dépôts éventuels de café qui peuvent se former autour d'elle sous l'effet de l'utilisation répétée de la machine.

Par suite de l'adoption de ce dispositif de lavage, le joint d'étanchéité qui est normalement prévu dans une cavité circulaire ménagée dans la tige 38 n'est plus nécessaire, sa fonction étant assurée par un joint circulaire 40 disposé immédiatement au-dessous du fond 41 (correspondant au fond référencé 25 ci-dessus) sur lequel s'appuie la poudre de café 42 comprimée par l'organe presseur 9.

Au cours du fonctionnement de la machine l'infusion de café passe à travers les trous du fond 41 pour descendre par le tube 26 jusque dans le réceptacle, tandis que l'eau de lavage qui pénètre par le tube 36 durant la production de l'infusion de café ou immédiatement après celle-ci, nettoie la tige 38 en la maintenant parfaitement propre, cette eau étant récupérée dans un récipient inférieur 43.

A la fin de cette opération de lavage et seulement après celle-ci, le fond 41 peut se soulever avec l'organe presseur 9 pour expulser la masse de café 42 désormais épuisée.

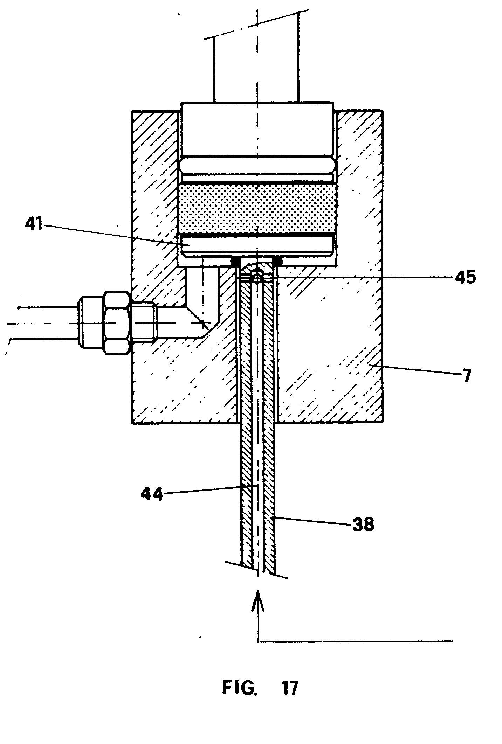

Dans la forme de réalisation illustrée en fig. 17, l'eau de lavage s'élève à travers un alésage 44 pratiqué axialement dans la tige 38 pour asperger l'espace situé au-dessous du fond 41; cette eau traverse les trous 45 et s'écoule à travers l'espace intermédiaire existant entre la tige 38 et l'alésage 44 pour être recueillie dans le récipient 43.

Les avantages obtenus moyennant adoption du dispositif de lavage suivant l'invention sont évidents. Le nettoyage continu de la tige 38 et de la perforation dans laquelle elle se déplace au cours de la phase d'infusion du café ou immédiatement après cette phase, évite tout risque de blocage par suite des pertes inévitables d'infusion, en éliminant toute obligation d'effectuer un nettoyage périodique pour opérer le déblocage de la tige avec le lavage subséquent.

Le joint 40 disposé en pareil cas immédiatement au-dessous du fond mobile 41 subit des sollicitations moins importantes que les joints annulaires usuels prévus dans la perforation du réceptacle 7 dans laquelle se déplace la tige 38, par le fait qu'il se meut avec la tige et le fond 41 sans être soumis à une friction quelconque de la part de parties mobiles.

Dans ces conditions ce joint a une durée utile nettement supérieure à celle des joints de la technique usuelle, si bien qu'il ne doit être remplacé qu'après des périodes d'utilisation considérablement plus longues.

On comprend par ailleurs que l'eau de lavage qui alimente le tube 36 et qui, dans l'exemple de réalisation ci-dessus décrit, est prélevée par l'électro-vanne 37, peut être obtenue à partir de tout autre type de source d'eau chaude ou froide sous pression sans pour cela sortir du cadre de l'invention.

De la description qui a été faite et des dessins qui l'illustrent, on notera que le mécanisme suivant l'invention est essentiellement constitué par la plaquette 1 et la plaque 5, la première étant mobile verticalement tandis que la seconde est fixe, ainsi que par un troisième élément plat, à savoir le levier 30 orienté parallèlement aux deux éléments précédents et monté à rotation sur l'axe 31 le mouvement de la plaquette 1 et de la plaque 5 est commandé par la rotation du disque 11, lui-même disposé dans un plan parallèle auxdites plaquette et plaque, ce qui met particulièrement en évidence la simplicité de construction et de fonctionnement de l'ensemble du mécanisme.

Il convient encore de remarquer la facilité avec laquelle peuvent être effectuée le nettoyage et la manutention de ce mécanisme dont les éléments constitutifs sont tous aisément accessibles depuis l'avant de la machine.

L'élimination complète de l'excès éventuel de café au niveau de la partie supérieure du réceptacle 7 telle qu'assurée par la raclette 21, ainsi que l'action du ressort de compensation 16, garantissent toujours un fonctionnement correct de la machine, même dans le cas d'une distribution d'une dose excessive de café par le moulin, ce qui évite tous les inconvénients qu'on rencontre habituellement lorsqu'il se présente un tassement de la poudre de café dans ledit réceptacle, en éliminant de la sorte l'une des plus fréquentes causes de blocage des machines automatiques.

Le lavage continu de la tige 38 qui supporte le fond mobile 41 garantit un fonctionnement sur de la machine dans le temps.

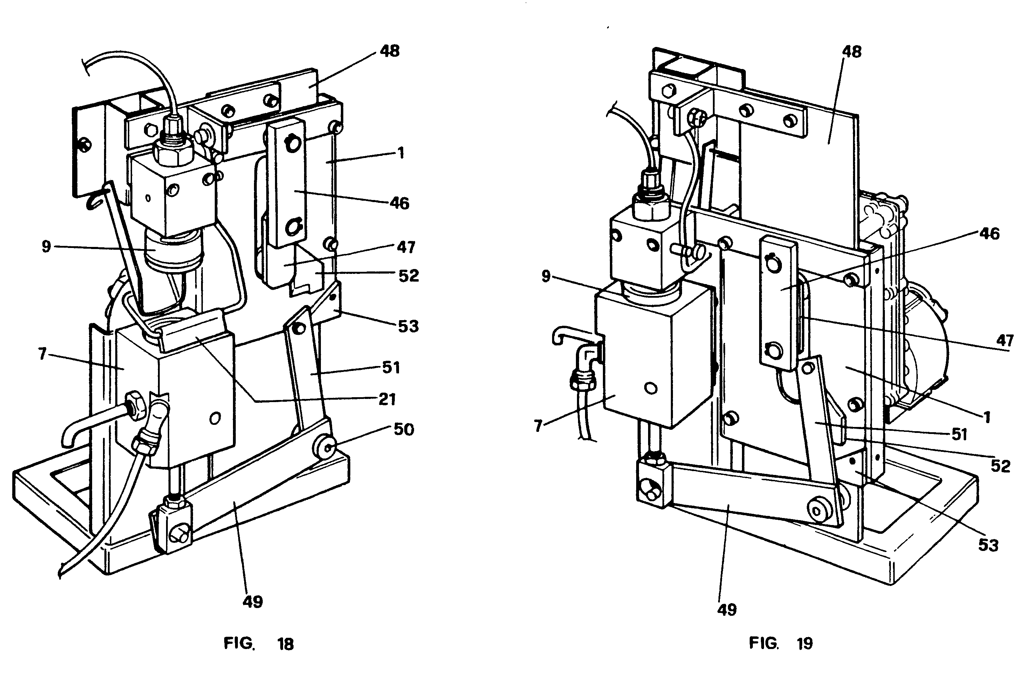

Dans le mode de mise en oeuvre de l'invention illustré en fig. 18 à 26, on notera que la plaquette mobile 1, équipée de l'organe presseur 9 qui pénètre dans le réceptacle 7 rempli de café moulu, est déplacée verticalement par un dispositif à bielle 46 et à manivelle 47 notablement simplifié sur le plan de la construction comme sur celui du fonctionnement par rapport au disque excentré décrit dans la forme de réalisation qui précède.

La plaquette mobile 1 est guidée dans son mouvement vertical par une plaque fixe 48. Le filtre qui soutient le café introduit dans le réceptacle 7 est repoussé par un levier 49 articulé en 50 et dont le bras en équerre 51 coopère, par l'intermédiaire d'un goujon en saillie, avec des reliefs 52 et 53 de la plaquette mobile 1.

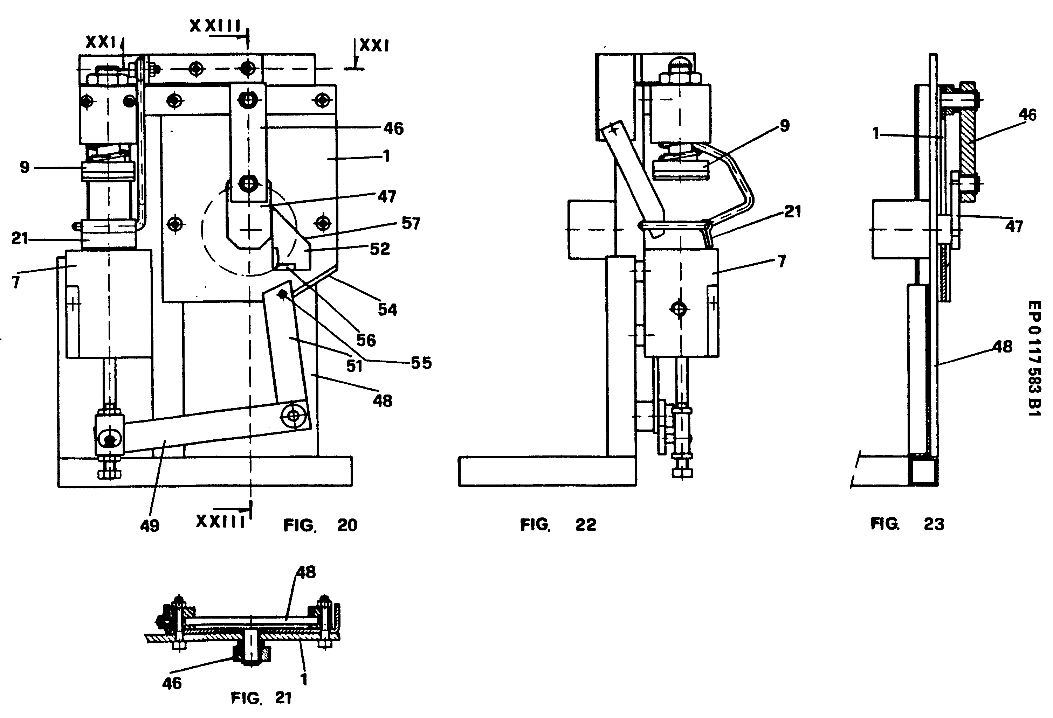

En fig. 20 à 23, cette plaquette mobile 1 et l'organe presseur 9 dont elle est pourvue se trouvant à la position la plus haute, avant d'entamer le mouvement de descente au cours duquel ledit organe 9 pénètre dans le réceptacle 7. A cette position le filtre lié au levier 49 est à l'état abaissé, prêt à recevoir le café qui est balayé superficiellement par la raclette 21.

On notera par ailleurs que la glissière 53 représentée en fig. 18 et 19 a été remplacée en fig. 20, 24 et 26 par un bord replié 54 de la plaquette mobile 1, ce bord jouant identiquement le même rôle.

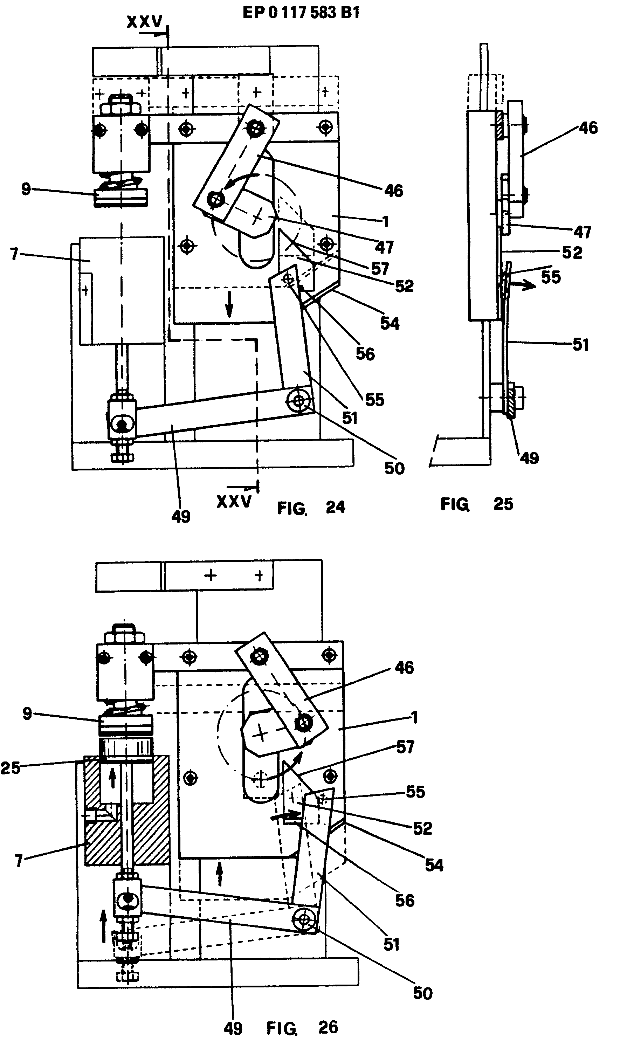

En fig. 24 à 26 on peut voir que le bras 51 porte vers l'arrière un relief profilé 55 qui s'accroche au bord replié 54 de la plaquette mobile 1 lorsque celle-ci s'élève sous l'action de la bielle 46. Le relief profilé 55 (fig. 24 et 25) du levier 51 coopère avec un plan incliné 56 (voir fig. 20) prévu sur le relief 52 pour s'élever sur celui-ci lorsque la plaquette mobile 1 s'abaisse. Ce relief profilé 55 s'accroche au bord incliné 57 du relief 52 quand la plaquette 1 arrive en fin d'abaissement sous l'action de la manivelle 47.

Le fonctionnement des deux leviers ou bras 49 et 51 ressort tout particulièrement de l'examen des fig. 24 à 26. En fig. 24 notamment, on peut observer que le relief profilé 55 a déjà coopéré avec le relief 52 sur lequel il est monté en se déplaçant sur le plan incliné 56, ce qui provoque une légère flexion du bras 51 (voir fig. 25), convenablement établi à cet effet.

Toutefois dès qu'au cours de l'abaissement de la plaquette 1 le relief 55 a dépassé le bord 57 du relief 52, le bras 51 se redresse. Lorsque sous la commande de la manivelle 47 la plaquette 1 remonte, le relief 55 se déplace le long du bord incliné 57 en amenant le levier 49 et le bras 51 à la position montrée en fig. 26, ce qui a pour effet de soulever le fond mobile 25 dans le réceptacle 7. La pastille de café exprimé est en conséquence ramenée à la surface et peut de ce fait être ensuite balayée par la raclette 21, exactement comme on l'a ci-dessus illustré.

Au cours de l'élévation de la plaquette mobile 1 le relief 55, une fois terminée sa course sur le bord incliné 57 du relief 52, vient au contact du bord replié 54 de la plaquette précitée, en obligeant ainsi le bras 51 à tourner à nouveau vers la gauche en assurant l'abaissement du fond 25.

On peut de la sorte constater que cette partie du mécanisme suivant l'invention est sensiblement simplifiée par rapport à l'ensemble décrit dans la première forme de réalisation. Il en résulte en outre plus grande fiabilité de fonctionnement et un réduction de prix de revient. Les autres caractéristiques restent inchangées en dépit des avantages obtenus.

**Revendications**

1. Mécanisme automatique pour la production de café express, destiné à être appliqué à un ensemble usuel comprenant un moulin café pour la production de café avec son moteur électrique entraînement et une chaudière pour la production d'eau chaude sous pression, le mécanisme étant du type comportant:

- un réceptacle (7) fixe dans lesquel s'effectue l'infusion de café,
- un fond (25) inférieur qui se déplace verticalement dans les deux sens à l'intérieur dudit réceptacle entre une position inférieure de production du café et une position supérieure de déchargement de la pastille épuisée en alignement avec le bord supérieur dudit réceptacle, ledit fond étant solidaire d'une tige (27),
- un organe presseur (9) supérieur qui se déplace verticalement dans les deux sens entre une position inférieure de production du café à l'intérieur dudit réceptacle (7) et une position supérieure à l'extérieur dudit réceptacle (7),
- un canal (22) d'alimentation en café frais du réceptacle qui pivote entre une position d'alimentation en café du réceptacle (7) et une position en retrait autorisant le passage de l'organe presseur (9),
- une raclette (21) associée au canal d'alimentation propre à venir par pivotement s'appliquer contre le débouché supérieur du réceptacle (7) en vue d'éliminer le café en excès qui dépasse le niveau supérieur dudit réceptacle (7) et à provoquer l'expulsion du café exprimé en dehors dudit réceptacle (7),
- des moyens d'alimentation en eau chaude de l'intérieur dudit réceptacle lorsque l'organe presseur et le fond inférieur se trouvent dans leur position de production de café,
- des moyens d'évacuation (26) de l'infusion obtenue à la suite du passage de l'eau chaude à travers la dose de café disposée dans le réceptacle,
- et des moyens pour actionner mécaniquement lesdits mouvements du fond (25) inférieur, de l'organe presseur (9), du canal (22) d'alimentation, de la raclette (21) et pour provoquer l'arrivée de l'eau chaude,

caractérisé en ce que le mécanisme automatique comprend en outre:
- une plaquette (1) mobile verticalement par rapport à une plaque (5) fixe,
- un bloc (8) portant l'organe presseur (9), monté solidaire de la plaquette mobile,
- des moyens (11, 46) de commande du mouvement vertical de la plaquette
et en ce que:
- la tige (27) reliée au fond inférieur est articulée sur une biellette (29) oscillant sur un axe (31) sous l'action d'un levier (30) comportant un mécanisme à came (32) actionné par un organe (33) solidaire de la plaquette (1) mobile,
- le canal (22) d'alimentation et la raclette (21) sont montés à rotation sur la partie fixe du mécanisme automatique et pivotent sous l'action d'une glissière (18) découpée d'une rainure (19) dans laquelle se déplace un organe (20) solidaire en translation de la plaquette (1),

- le bloc (8) portant l'organe presseur, la biellette (29) ainsi que le levier (30) à came et l'organe (33) solidaire de la plaquette (1) provoquant le mouvement du fond (25) inférieur, la glissière (18) munie d'une rainure (19) dans laquelle se déplace l'organe solidaire (20) en translation de la plaquette (1) provoquant le mouvement du canal (22) d'alimentation et de la raclette (21) sont agencés d'une manière telle que le déplacement vertical d'abaissement et de soulèvement successifs de la plaquette (1) mobile depuis une phase de départ où la plaquette (1) est à sa position supérieure jusqu'au retour à cette position, commande le chargement du réceptacle (7) porte filtre, le nivellement de la charge de de café en poudre, l'abaissement de l'organe presseur (9), la préparation de l'infusion, ainsi que le soulèvement du fond inférieur amenant à l'extérieur du réceptacle la pastille de café exprimé et l'éjection de celle-ci au moyen de la raclette (21) à la fin du cycle opératoire.

2. Mécanisme suivant la revendication 1, caractérisé en ce que tout le mouvement de descente et de montée de la plaquette mobile (1) est commandé par un disque circulaire (11) monté de manière excentrée sur un axe (12) qui forme en outre guide pour ladite plaquette, deux portées (13, 14) étant prévues en saillie sur l'arrière de cette plaquette de manière à former appui pour le disque (11) qui dans ces conditions assure l'abaissement et le soulèvement de celle-ci.

3. Mécanisme suivant la revendication 2, caractérisé en ce qu'un canal incliné (22) et une glissière mobile (18) associée à celui-ci et munie d'une rainure profilée (19) à l'intérieur de laquelle se déplace un goujon (20) prévu en saillie sur le bloc (8) solidaire de la plaquette mobile (1), se déplacent vers l'avant en permettant le chargement du réceptacle (7) pour revenir ensuite vers l'arrière à la fin de la rotation du disque de commande (11) en provoquant de la sorte l'expulsion de l'excès de café sur le débouché du réceptacle (7) avant que l'organe presseur (9) ne pénètre dans celui-ci, ce qui élimine toute possibilité d'obstruction du café avant la réalisation de l'infusion.

4. Mécanisme suivant l'une quelconque des revendications 2 et 3, caractérisé en ce qu'un levier profilé (30) monté à rotation autour d'un axe (33), mais restant en permanence orienté suivant un plan parallèle à celui de la plaquette mobile (1) et de la plaque fixe (5) sur laquelle elle se déplace, est découpé d'une ouverture intérieure (32) en forme de came à l'intérieur de laquelle est engagé un goujon (33) prévu en saillie sur la plaquette mobile (1) de façon à provoquer, à la fin de l'infusion du café, le soulèvement du fond mobile (25) disposé à l'intérieur du réceptacle (7), après que l'organe presseur (9) se soit soulevé sous l'action du disque (11) en vue de permettre l'expulsion du café exprimé en dehors dudit réceptacle.

5. Mécanisme suivant la revendication 4, caractérisé en ce que le levier (30) présente vers le haut un bord incliné (34) qui, par portée contre le goujon (33) de la plaquette mobile (1), fait basculer vers l'avant ledit levier autour de son axe de rotation (31) à l'encontre de l'action d'un ressort de rappel (35), en permettant audit goujon (33) de passer à travers l'ouverture (32) du levier (30) sans provoquer la rotation de celui-ci lors de la course de descente, tandis que lors de la course de montée ce levier (30) tourne sur son axe (31) en soulevant de la sorte le fond mobile (25) du réceptacle (7).

6. Mécanisme suivant l'une quelconque des revendications 1 à 5, caractérisé en ce qu'un jet d'eau sous pression et à haute température est refoulé à travers un tube (36) à l'intérieur d'une cavité circulaire (39) ménagée autour de la tige (27 ou 38) qui soutient le fond mobile perforé (25 ou 41) formant filtre et soutenant la masse de café (42) destinée à l'infusion, cette eau étant évacuée à travers un tube de refoulement (26) en assurant de la sorte un lavage efficace de la tige (27 ou 38) et de la perforation dans laquelle celle-ci se déplace, dans le même laps de temps au cours duquel l'infusion est produite ou immédiatement après, ce qui garantit un nettoyage parfait et continu de cette tige tout au long du fonctionnement de la machine et élimine de la sorte la nécessité de tout nettoyage et manutention en écartant tout risque de blocage.

7. Mécanisme suivant la revendication 6, caractérisé en ce que les garnitures usuelles disposées dans la perforation du réceptacle (7) dans laquelle se déplace la tige (27 ou 38) du fond mobile (25 ou 41) sont éliminées, un simple joint annulaire (40) étant disposé sur la tige précitée immédiatement au-dessous du fond en étant mobile avec celui-ci, ce joint empêchant le passage de l'infusion de café le long de la tige lorsque le fond est abaissé, sans être soumis à un effet de friction quelconque durant le mouvement de ce fond.

8. Mécanisme suivant l'une quelconque des revendications 6 et 7, caractérisé en ce que l'eau chaude sous pression qui alimente le tube (36) destiné au lavage de la tige (27 ou 38) du fond mobile (25 ou 41) est prélevée au niveau du refoulement de l'électro-vanne (37) qui commande l'alimentation en eau chaude de l'organe presseur (9) cette eau étant normalement refoulée dans un récipient approprié.

9. Mécanisme suivant la revendication 1, caractérisé en ce que le mouvement de la plaquette mobile (1) qui commande l'organe (9) pour la compression du café, est assuré par une manivelle (47) agissant sur une bielle (46) reliée à articulation à ladite plaquette, cette dernière se déplaçant sur une plaque fixe (48).

10. Mécanisme suivant la revendication 9, caractérisé en ce que la plaquette mobile (1) est munie d'un relief (52) pourvu d'un plan incliné inférieur (56) et d'un bord supérieur incliné (57), tandis qu'il est en outre prévu sur ladite plaquette (1) un relief (53) qui présente un profil triangulaire au niveau de son angle inférieur et qui coopère avec un relief profilé (55), tourné vers l'intérieur et ménagé sur le bras (51) d'un levier en équerre, le bras opposé (49) de celui-ci étant relié à articulation l'arbre qui soutient le fond (25) prévu mobile à l'intérieur du réceptacle (7), en opérant ainsi les déplacements verticaux dudit fond, le relief profilé (55) présentant un plan incliné qui en liaison avec le plan incliné (56) prévu sur le relief (52) de la plaquette mobile (1) permet audit relief (55) de monter sur ledit relief (52) lorsque la plaquette descend et oblige les bras (49, 51) à tourner dans le sens des aiguilles d'une montre, en soulevant de la sorte le fond précité (25) quand le café exprimé doit être expulsé du réceptacle (7).

11. Mécanisme suivant la revendication 10, caractérisé en ce que la tôle qui constitue le bras (51) du levier (49 - 51) lié au fond mobile (25) est légèrement flexible afin de permettre au relief profilé (55) de monter sur le plan incliné (56) du relief (52), puis de descendre sur le bord incliné (57) qui fait ensuite tourner le levier sus-mentionné (49 - 51) autour de son axe de rotation (50), en opérant ainsi le soulèvement du fond mobile (25) à l'intérieur du réceptacle (7).

**Patentansprüche**

1. Automatische Vorrichtung zur Herstellung von Espressokaffee, die dafür bestimmt ist an eine herkömmliche Anordnung angebracht zu werden, die eine Kaffeemühle für die Herstellung des Kaffees mit ihrem elektrischen Antriebsmotor und eine Heizvorrichtung für die Erzeugung von heißem Wasser unter Druck aufweist, wobei die Vorrichtung vom Typ ist, der aufweist:

- einen festen Auffang (7), in dem der Aufguß des Kaffees stattfindet,
- einen unteren Boden (25), der sich in die beiden Richtungen im Inneren des genannten Auffangs zwischen einer unteren Kaffeeerzeugungsstellung und einer oberen Ausbringstellung der verbrauchten Tablette unter Fluchten mit dem oberen Rand des Auffangs bewegt, wobei der Boden mit einer Stange (27) verbunden ist,
- ein oberes Preßorgan (9), das sich vertikal in die beiden Richtungen zwischen einer unteren Kaffeeerzeugungsstellung im Inneren des Auffangs (7) und einer oberen Stellung außerhalb des genannten Auffangs (7) bewegt,
- einen Zuführkanal (22) von frischem Kaffee zu dem Auffang, der zwischen einer Kaffeezufuhrstellung des Auffangs (7) und einer Rückzugsstellung schwenkt, die das Passieren des Preßorgangs (9) erlaubt,
- einen dem Zuführkanal zugeordneten Schaber (21), der geeignet ist durch Schwenken gegen die obere Mündung des Auffangs (7) anzuschlagen, um den überschüssigen Kaffee, der das obere Niveau des Auffangs (7) übersteigt, zu entfernen, und um den Auswurf des ausgepreßten Kaffees aus dem Auffang (7) hervorzurufen,

- Zuführeinrichtungen von heißem Wasser zum Inneren des Auffangs, wenn das Preßorgan und der untere Boden sich in ihrer Kaffeeerzeugungsstellung befinden,
- Ausbringeinrichtung (26) des Aufgusses, der nachfolgend des Hindurchtritts des heißen Wassers durch die Kaffeedosis erhalten wird, die in dem Auffang angeordnet ist, und
- Einrichtungen, um mechanisch die Bewegungen des unteren Bodens (25), des Preßorgangs (9), des Zuführkanals (22), des Schabers (21) zu betätigen, und um die Zuführung des heißen Wassers hervorzurufen,

dadurch gekennzeichnet,

daß die automatische Vorrichtung weiterhin aufweist:

- ein Plättchen (1), das bezüglich einer festen Platte (5) beweglich ist,
- einen das Preßorgan (9) tragenden Block (8), der mit dem beweglichen Plättchen verbunden angeordnet ist,
- Betätigungseinrichtungen (11, 46) der vertikalen Bewegung des Plättchens,

und dadurch, daß

- die mit dem unteren Boden verbundene Stange (27) auf einem Schwingarm (29) angelenkt ist, der auf einer Achse (31) unter Einwirkung eines Hebels (30) oszilliert, der einen Nockenmechanismus (32) aufweist, der durch ein Organ (33) betätigt wird, das mit dem beweglichen Plättchen (1) verbunden ist,
- der Zuführkanal (22) und der Schaber (21) drehbeweglich auf dem festen Bereich der automatischen Vorrichtung angeordnet sind und unter Einwirkung einer Laufschiene (18) schwenken, die von einer Kerbe (19) geschnitten ist, in der sich ein Organ (20) bewegt, das in Translation mit dem Plättchen (1) verbunden ist,
- der Block (8), der das Preßorgan trägt, der Schwingarm (29) sowie der Nockenhebel (30) und das Organ (33), das mit dem Plättchen (1) verbunden ist, die Bewegung des unteren Bodens (25) hervorrufen, die Laufschiene (18), die mit einer Kerbe (19) versehen ist, in der sich das Organ (20) bewegt, das bei Translation mit dem Plättchen (1) verbunden ist, das die Bewegung des Zuführkanals (22) und des Schabers (21) hervorruft, derart angeordnet sind, daß die vertikale aufeinanderfolgende Absink- und Anhebbewegung des mobilen Plättchens (1) von einer Anfangsphase aus, wo das Plättchen (1) sich in seiner oberen Position befindet, bis zur Rückkehr zu dieser Position, die Beaufschlagung des einen Filter tragenden Auffangs (7), das Einebnen der Charge von pulverförmigem Kaffee, das Absenken des Preßorgangs (9), die Bereitung des Aufgusses, sowie das Anheben des unteren Bodens steuert, das die ausgepreßte bzw. ausgedrückte Kaffeetablette aus dem Auffang heraus und den Auswurf dieser mittels des Schabers (21) am Ende des Arbeitszyklusses bringt.

2. Vorrichtung nach Anspruch 1, dadurch gekennzeichnet, daß die gesamte Abwärts- und Aufwärtsbewegung des beweglichen Plättchens (1) durch eine kreisförmige Scheibe (11) gesteuert wird, die exzentrisch auf einer Achse (12) angeordnet ist, die weiterhin eine Führung für das genannte Plättchen bildet, wobei zwei Stützen (13, 14) vorspringend nach hinten dieses Plättchens derart vorgesehen sind, um einen Anschlag für die Scheibe (11) zu bilden, die unter diesen Bedingungen das Absenken und Anheben von ihm sicherstellt.

3. Vorrichtung nach Anspruch 2, dadurch gekennzeichnet, daß ein geneigter Kanal (22) und eine bewegliche Laufschiene (18), die mit diesem verbunden ist, mit einer profilierten Kerbe (19) versehen ist, an derem Inneren sich ein Bolzen (20) bewegt, der vorspringend an dem Block (8) vorgesehen ist, der mit dem beweglichen Plättchen (1) verbunden ist, sich nach vorne bewegen unter Ermöglichung des Auffüllens des Auffangs (7), um anschließend am Ende der Drehung der Steuerscheibe (11) nach hinten zurückzukommen, um so den Auswurf des Kaffeeüberschusses auf der Mündung des Auffangs (7) hervorzurufen, bevor das Preßorgan (9) in diesen eindringt, was eine jegliche Möglichkeit einer Verstopfung des Kaffees vor der Herstellung des Aufgusses verhindert.

4. Vorrichtung nach einem der Ansprüche 2 oder 3, dadurch gekennzeichnet, daß ein profilierter Hebel (30) der drehbeweglich um eine Achse (31) angeordnet ist, jedoch stets gemäß einer Ebene, ausgerichtet ist, die parallel zu jener des beweglichen Plättchens (1) und der festen Platte (5) verläuft, auf der sie sich bewegt, mit einer inneren Öffnung (32) in Form eines Nocken ausgeschnitten ist, in deren Inneren ein Bolzen (33) eingreift, der vorspringend auf dem beweglichen Plättchen (1) derart angeordnet ist, um am Ende des Aufgusses des Kaffees das Anheben des beweglichen Bodens (25) hervorzurufen, der im Inneren des Auffangs (7) angeordnet ist, nachdem das Preßorgan (9) unter der Einwirkung der Scheibe (11) sich angehoben hat, um den Auswurf des ausgepreßten Kaffees aus dem Auffang zu erlauben.

5. Vorrichtung nach Anspruch 4, dadurch gekennzeichnet, daß der Hebel (30) nach oben einen geneigten Rand (34) aufweist, der durch Abstützung gegen den Bolzen (33) des beweglichen Plättchens (1) den Hebel nach vorne um seine Rotationsachse (31) beim Auftreffen einer Einwirkung einer Rückstellfeder (35), was dem Bolzen (33) erlaubt, durch die Öffnung (32) des Hebels (30) hindurchzutreten, ohne dessen Drehung bei der Abwärtsstrecke hervorzurufen, während bei der Aufwärtsstrecke dieser Hebel (30) sich auf seiner Achse (31) dreht, unter Anhebung somit des beweglichen Bodens (25) des Auffangs (7).

6. Vorrichtung nach einem der Ansprüche 1 bis 5, dadurch gekennzeichnet, daß ein Wasserstrahl unter Druck und unter hoher Temperatur durch ein Rohr (36) in das Innere einer kreisförmigen Ausnehmung (39) gestaut wird, die um die Stange (27 oder 38) angeordnet ist, die den perforierten beweglichen Boden (25 oder 41) stützt, der einen Filter bildet, und die Kaffeemasse (42), die für den Aufguß bestimmt ist trägt, wobei dieses Wasser durch ein Rücklaufrohr (26) ausgebracht wird, unter Sicherstellung so eines wirksamen Waschens der Stange (27 oder 38) und der Perforation in der sich diese bewegt, in demselben Zeitabschnitt während dem der Aufguß erzeugt wird oder unmittelbar danach, was eine perfekte und kontinuierliche Säuberung dieser Stange während des Betriebs der Maschine sicherstellt und so die Notwendigkeit eines jeglichen Säuberns und Betätigens eliminiert, unter Vermeidung jeglicher Blockierungsgefahr.

7. Vorrichtung nach Anspruch 6, dadurch gekennzeichnet, daß die herkömmlichen Garnituren, die in der Perforation des Auffangs (7) angeordnet sind, in dem sich die Stange (27 oder 38) des beweglichen Bodens (25 oder 41) bewegt, eliminiert sind, eine einfache Ringdichtung (40) auf der vorgenannten Stange unmittelbar unterhalb des Bodens angeordnet ist, wobei sie mit diesem beweglich ist, wobei diese Dichtung den Durchtritt des Aufgusses des Kaffees entlang der Stange verhindert, wenn der Boden abgesenkt wird, ohne unter einen jedweden Reibungseffekt während der Bewegung des Bodens gesetzt werden.

8. Vorrichtung nach einem der Ansprüche 6 oder 7, dadurch gekennzeichnet, daß das heiße Wasser unter Druck, das das Rohr (36) speist, das für das Waschen der Stange (27 oder 38) des beweglichen Bodens (25 oder 41) bestimmt ist, angehoben wird auf das Stauniveau des Elektroventils (37), das die Speisung von heißem Wasser des Preßorgans (9) steuert, wobei dieses Wasser normalerweise in einem geeigneten Behälter gestaut wird.

9. Vorrichtung nach Anspruch 1, dadurch gekennzeichnet, daß die Bewegung des beweglichen Plättchens (1), das das Organ (9) für die Komprimierung des Kaffees steuert, durch einen Betätigungshebel (47) sichergestellt ist, der auf ein Zwischenglied (46) wirkt, das gelenkig mit dem Plättchen verbunden ist, wobei letzteres sich auf einer festen Platte (48) bewegt.

10. Vorrichtung nach Anspruch 9, dadurch gekennzeichnet, daß das bewegliche Plättchen (1) mit einem Vorsprung bzw. Relief (52) versehen ist, das mit einer unteren geneigten Ebene (56) und einem oberen geneigten Rand (57) versehen ist, während weiterhin an dem Plättchen (1) ein Relief bzw. Vorsprung (53) vorgesehen ist, der ein dreieckiges Profil auf der Höhe seiner unteren Ecke aufweist, und der mit einem profilierten Vorsprung (55) zusammenwirkt, der in das Innere gedreht ist und auf dem Arm (51) eines Winkelhebels ausgebildet ist, wobei der ihm gegenüberliegende Arm (49) gelenkig mit der Achse verbunden ist, die den Boden (25) stützt, der im Inneren des Auffangs (7) beweglich vorgesehen ist, unter Bewirken so der vertikalen Bewegungen des Bodens, wobei der profilierte Vorsprung (55) eine geneigte Ebene aufweist, die in Verbindung mit der geneigten Ebene (56), die an dem Vorsprung (52) des beweglichen Plättchens (1) angeordnet ist, diesem Vorsprung (55) erlaubt, auf dem genannten Vorsprung (52) aufzusteigen, wenn das Plättchen absinkt und den Arm (49, 51) zwingt in Uhrzeigerrichtung sich zu drehen, unter Anheben so des vorgenannten Bodens (25), wenn der ausgepreßte Kaffee aus dem Auffang (7) ausgeworfen werden soll.

11. Vorrichtung nach Anspruch 10, dadurch gekennzeichnet, daß das Blech, das den Arm (51) des Hebels (49 - 51) bildet, der mit dem beweglichen Boden (25) verbunden ist, leicht flexibel bzw. biegsam ist, um dem profilierten Vorsprung (55) zu erlauben auf der geneigten Ebene (56) des Vorsprungs (52) aufzusteigen, sodann auf dem geneigten Rand (57) abzusinken, der sodann den vorgenannten Hebel (49 - 51) um seine Drehachse (50) dreht, unter Bewirkung so des Anhebens des beweglichen Bodens (25) im Inneren des Auffangs (7).


## Claims

1. Automatic mechanism for the production of espresso coffee, designed for use with a standard assembly comprising a coffee mill for producing coffee with its electric drive motor and a boiler for producing pressurised hot water, said mechanism being of the type that includes the following:

- a fixed container (7) in which coffee infusion takes place,
- a lower bottom (25) which moves vertically in both directions inside said container between a lower, coffee-producing position and an upper position for discharging the spent tablet in alignment with the upper edge of said container, said bottom being fast with a rod (27),
- an upper pressure member (9) which moves vertically in both directions between a lower, coffee-producing position inside said container (7) and an upper position outside of said container (7),
- a channel (22) for supplying fresh coffee to the container (7) which pivots between a position in which coffee is supplied to the container (7) and a retracted position which allows the pressure member (9) to pass,
- a scraper (21) associated with the supply channel and adapted to be applied by pivoting against the top discharge opening of the container (7) for the purpose of removing the surplus coffee which comes past the top level of said container (7) and of causing the expressed coffee to be expelled outside said container (7),
- means for supplying hot water to the interior of said container when the pressure member and the lower bottom are in their coffee-producing position,
- means (26) for evacuating the infusion obtained following the passage of the hot water through the measure of coffee disposed in the container,
- and means for mechanically actuating said movements of the lower bottom (25), the pressure member (9), the supply channel (22), the scraper (21) and for causing the hot water to arrive,

characterised in that the automatic mechanism further includes the following:
- a plate (1) which is vertically movable with respect to a fixed panel (5),
- a block (8) carrying the pressure member (9), mounted fast with the movable plate,
- means (11, 46) for controlling the vertical movement of the plate,

and in that:
- the rod (27) joined to the lower bottom is articulated on a rocker bar (29) which swings on an axle (31) under the action of a lever (30) having a cam mechanism (32) actuated by a member (33) fast with the movable plate (1),
- the supply channel (22) and the scraper (21) are rotatably mounted on the fixed portion of the automatic mechanism and pivot under the action of a sliding rail (18) into which a groove (19) has been cut in which a member (20) fast in translation with the plate (1) is displaced,
- the block (8) carrying the pressure member, the rocker (29), as well as the cam lever (30) and the member (33) fast with the plate (1) causing the lower bottom (25) to move, the sliding rail (18) provided with a groove (19) in which the member (20) fast in translation with the plate (1) is displaced, causing the supply channel (22) and the scraper (21) to move, are so arranged that the successive vertical lowering and lifting movement of the movable plate (1), from a starting phase in which the plate (1) is in its top position until it returns to this position, controls the filling of the filter-bearing container (7), the levelling of the batch of coffee powder, the lowering of the pressure member (9), the preparation of the infusion, as well as the lifting of the lower bottom by which the tablet of expressed coffee is taken outside the container, and the ejection thereof by means of the scraper (21) at the end of the operating cycle.

2. Mechanism according to claim 1, characterised in that the entire movement of descent and ascent of the movable plate (1) is controlled by a circular disc (11) mounted eccentrically on an axle (12) which further acts as a guide for said plate, two support members (13, 14) projecting on the rear of said plate in such a way that they form an abutment surface for the disc (11) which in these circumstances ensures that said plate is lowered and raised.

3. Mechanism according to claim 2, characterised in that a sloping channel (22) and a movable sliding rail (18) associated with the latter and equipped with a profiled groove (19) inside which moves a pin (20) which projects on the block (8) fast with the movable plate (1), move forwards enabling the container (7) to be filled, thereafter returning backwards at the end of the rotation of the control disc (11), in this manner causing the surplus coffee to be expelled at the discharge opening of the container (7) before the pressure member (9) enters the latter, thereby obviating any risk of a blockage of the coffee before the infusion is finished.

4. Mechanism according to either one of claims 2 and 3, characterised in that a profiled lever (30) rotatably mounted on an axle (31) but permanently remaining orientated along a plane parallel to that of the movable plate (1) and the fixed panel (5) on which it moves, incorporates a cam-shaped internal opening (32) inside which a pin (33) is engaged which projects on the movable plate (1) so as to cause, at the end of the infusion of the coffee, the movable bottom (25) disposed inside the container (7) to be raised once the pressure member (9) has been lifted by the action of the disc (11) so as to enable the expressed coffee to be expelled outside said container.

5. Mechanism according to claim 4, characterised in that the lever (30) upwardly presents a sloping edge (34) which, by abutment against the pin (33) of the movable plate (1) causes said lever to swing forwards about its rotational axis (31) against the action of a return spring (35), allowing said pin (33) to pass through the opening (32) in the lever (30) without causing the latter to rotate during its downward travel, whereas during upward travel said lever (30) rotates on its axle (31) and thereby raises the movable bottom (25) of the container (7).

6. Mechanism according to any one of claims 1 to 5, characterised in that a high-temperature jet of pressurised water is forced through a tube (36) inside a circular cavity (39) incorporated around the rod (27 or 38) which supports the perforated movable bottom (25 or 41) forming the filter and supporting the volume of coffee (42) intended for the infusion, said water being evacuated through a return tube (26), thereby ensuring effective rinsing of the rod (27 or 38) and of the hole in which the latter moves, in the same time interval in which the infusion is produced or immediately after, which guarantees that said rod is properly and continuously cleaned for as long as the machine is in operation and thereby avoids the need for any cleaning and handling, obviating any risk of blockage.

7. Mechanism according to claim 6, characterised in that the standard fittings disposed in the hole in the container (7) in which the rod (27 or 38) of the movable bottom (25 or 41) is displaced are omitted, a simple annular joint (40) being disposed on the aforesaid rod immediately below the bottom and adapted to move with the latter, said joint preventing the coffee infusion from passing along the rod when the bottom is lowered, without being subjected to any friction whatever during the movement of said bottom.

8. Mechanism according to either one of claims 6 and 7, characterised in that the pressurised hot water which supplies the tube (36) designed to rinse the rod (27 or 38) of the movable bottom (25 or 41) is taken off at the return level of the electro-valve (37) which controls the supply of hot water to the pressure member (9), said water being forced normally into a suitable receptacle.

9. Mechanism according to claim 1, characterised in that the movement of the movable plate (1) which controls the member (9) for compression of the coffee is ensured by a handle (47) acting on a connecting rod (46) hinged on said plate (1), the latter moving on a fixed panel (48).

10. Mechanism according to claim 9, characterised in that the movable plate (1) has a raised area (52) provided with a lower sloping plane (56) and a sloping upper edge (57) while there is further provided on said plate (1) a raised area (53) which presents a triangular profile at the level of its lower angle and which cooperates with a profiled raised area (55), turned inwardly and incorporated on the arm (51) of an angled lever, the opposed arm (49) of the latter being hinged on the shaft which supports the bottom (25) which is adapted to move inside the container (7), thus controlling the vertical displacements of said bottom, the profiled raised area (55) presenting a sloping plane which in conjunction with the sloping plane (56) provided on the raised area (52) of the movable plate (1) enables said raised area (55) to ascend said raised area (52) when the plate descends and forces the arms (49, 51) to turn in the manner of the hands of a clock, thereby raising the aforesaid bottom (25) when the expressed coffee has to be expelled from the container (7)

11. Mechanism according to claim 10, characterised in that the sheet metal constituting the arm (51) of the lever (49 - 51) linked to the movable bottom (25) is slightly flexible in order to allow the profiled raised area (55) to ascend the sloping plane (56) of the raised area (52), then to descend the sloping edge (57) which then causes the abovementioned lever (49 - 51) to rotate about its axis of rotation (50), thus controlling the lifting of the movable bottom (25) within the container (7).

FIG. 2

FIG. 1

FIG. 4

FIG. 3

FIG. 5

FIG. 6

EP 0 117 583 B1

FIG. 7

1

11

12

7

33

30

35

31

EP 0 117 583 B1

8

9

11

7

29

1

2

30

31

FIG. 8

FIG. 10

FIG. 9

FIG. 11

EP 0 117 583 B1

FIG. 13

FIG. 12

13

FIG. 14

FIG. 16

FIG. 15

**FIG. 17**

FIG. 19

FIG. 18

FIG. 23

FIG. 22

FIG. 20

FIG. 21

23

EP 0 117 583 B1

XXV

9

7

46

47

57

52

54

56

55

51

50

49

XXV

FIG. 24

46

47

52

55

51

49

FIG. 25

9

25

7

46

1

57

55

52

54

56

51

50

49   FIG. 26

25